# DEMANDE DE BREVET EUROPEEN

(11) **EP 1 526 746 A1**
(43) Date de publication de la demande: **27.04.2005**
(21) Numéro de dépôt: 04292503.2
(22) Date de dépôt: 21.10.2004
(51) Int. Cl.: H04Q 7/22

(54) **Réception par un terminal traversant plusieurs zones d'informations diffusées dans ces zones**

(30) Priorité: 22.10.2003 FR 0312345
(71) Demandeur: FRANCE TELECOM, 75015 Paris (FR)
(72) Inventeur: Bourliataud, Christian, 78370 Plaisir (FR); Richon, Thomas, 75002 Paris (FR); Cassagnabere, Brice, 92300 Levallois Perret (FR)
(74) Mandataire: de la Bigne, Guillaume Michel Marie

(57) **Abrégé**

L'invention concerne un procédé de réception, par un terminal mobile (T), d'informations diffusées de manière répétée en mode paquets. Au moins une des informations comprend une pluralité de paquets, diffusés dans au moins une zone de diffusion (Z1, Z2, Z3) traversée par le terminal. Ce procédé comporte une étape de réception et de stockage de paquets correspondant à une information diffusée dans la zone (Z1, Z2, Z3) traversée.

Le procédé comporte en outre une étape de stockage dans le terminal mobile (T) de données de suivi de la réception de ces paquets.

L'invention concerne également un terminal mobile (T), mettant en oeuvre ce procédé.

## Description

La présente invention concerne un procédé de réception par un terminal mobile d'informations diffusées en mode paquets dans au moins une zone de diffusion. Elle concerne également un terminal mobile de réception selon ce procédé.

On connaît déjà dans l'état de la technique, un procédé de réception, par un terminal mobile, d'informations diffusées de manière répétée en mode paquets, au moins une des informations diffusées comprenant une pluralité de paquets diffusés dans au moins une zone de diffusion traversée par le terminal, ce procédé comportant une étape de réception et de stockage des paquets correspondant à cette information.

Ce procédé, en général basé sur le protocole UDP/IP, permet à un récepteur mobile de télécharger des informations diffusées par au moins un émetteur, en diffusion de type multicast ou de type broadcast. Cet émetteur diffuse les informations sur une pluralité de zones de diffusion, dans l'une desquelles se trouve le récepteur mobile.

Si ce récepteur mobile quitte la zone de diffusion dans laquelle il se trouve, il cesse de recevoir l'information et devra reprendre le téléchargement depuis le début lorsqu'il entrera à nouveau dans une autre zone de diffusion.

L'invention a pour but de remédier à cet inconvénient en fournissant un procédé de réception par un terminal mobile d'une information diffusée en mode paquets susceptible de permettre à un terminal mobile de sortir d'une zone de diffusion sans devoir ensuite reprendre depuis le début le téléchargement de l'information s'il n'a pas eu le temps de la télécharger entièrement dans la zone qu'il vient de quitter.

A cet effet, l'invention a pour objet un procédé de réception, par un terminal mobile, d'informations diffusées de manière répétée en mode paquets, au moins une des informations diffusées comprenant une pluralité de paquets diffusés dans au moins une zone de diffusion traversée par le terminal, ce procédé comportant une étape de réception et de stockage des paquets correspondant à cette information, caractérisé en ce qu'il comporte en outre une étape de stockage dans le terminal mobile de données de suivi de la réception de ces paquets.

Grâce à ces données de suivi stockées dans le terminal mobile, ce dernier garde constamment en mémoire quels sont les paquets qui ont déjà été reçus dans au moins une zone de diffusion, ce qui lui permet de compléter le téléchargement avec les paquets manquants lorsque le récepteur entre à nouveau dans une autre zone de diffusion.

Suivant d'autres caractéristiques optionnelles de ce procédé :
- lorsque le terminal mobile reçoit un premier paquet concernant ladite information après être entré dans la zone de diffusion, le procédé comporte une étape de vérification de l'existence d'un fichier de suivi de la réception des paquets concernant cette information, étape au terme de laquelle un tel fichier de suivi est créé s'il n'existait pas, afin d'y stocker des premières données de suivi concernant ce premier paquet ;
- lors de la création du fichier de suivi, on détermine l'espace mémoire devant être réservé dans le terminal mobile pour le stockage de tous ces paquets correspondant à l'information diffusée, ainsi que le nombre de paquets à recevoir concernant cette information, à partir de données incluses dans le premier paquet reçu ;
- au terme de l'étape de vérification, dans le cas où le fichier de suivi existe, ce fichier de suivi est ouvert, puis, après une étape de comparaison des données de suivi concernant le premier paquet avec les données déjà stockées dans le fichier de suivi, on stocke le paquet dans le terminal et les données de suivi le concernant dans le fichier de suivi, uniquement si celles-ci ne s'y trouvent pas déjà ;
- le fichier de suivi est sauvegardé en mémoire après chaque opération susceptible de le modifier ;
- le fichier de suivi est sauvegardé en mémoire lorsque la réception est interrompue, notamment lorsque le terminal mobile sort de la zone de diffusion ;
- les données de suivi comportent une indication de la taille totale de l'information ainsi que du nombre de paquets la constituant ;
- les données de suivi comportent une liste des paquets précédemment reçus par le terminal mobile, concernant ladite information ;
- le terminal reçoit et stocke plusieurs paquets concernant plusieurs informations différentes diffusées dans la zone traversée.

L'invention a également pour objet un terminal mobile de réception d'informations diffusées de manière répétée en mode paquets, au moins une des informations diffusées comprenant une pluralité de paquets diffusés dans au moins une zone de diffusion susceptible d'être traversée par le terminal mobile, le terminal comportant des moyens de réception et de stockage des paquets correspondant à cette information, caractérisé en ce qu'il comporte en outre des moyens de stockage de données de suivi de la réception de ces paquets.

L'invention sera mieux comprise à la lecture de la description qui va suivre, donnée uniquement à titre d'exemple et faite en se référant aux dessins annexés dans lesquels :
- la figure 1 représente une installation comprenant un terminal mobile de réception selon l'invention et plusieurs zones de diffusion traversées par ce terminal ;
- la figure 2 représente une succession d'étapes de diffusion d'information de manière répétée, mise en oeuvre par l'installation de la figure 1 sur laquelle sont reportées les entrées et sorties de zones de diffusion ;
- la figure 3 schématise l'étape de réception d'un paquet d'information, mise en oeuvre par un procédé selon l'invention ;
- les figures 4 à 6 schématisent le procédé complet de réception d'une information par le terminal de la figure 1.

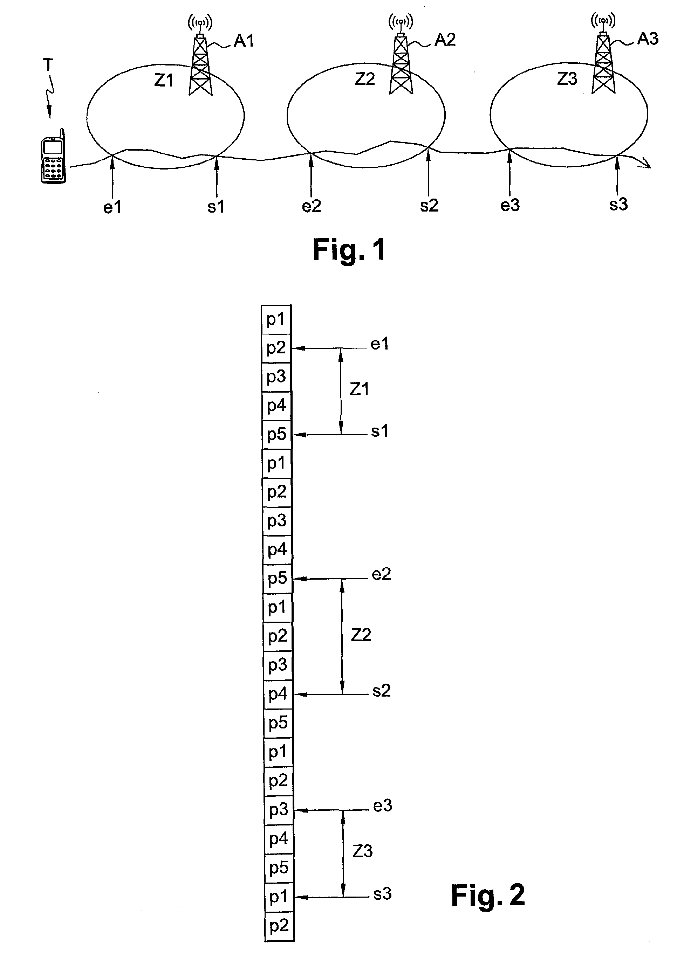

On a représenté sur la figure 1 un terminal mobile T, traversant trois zones de diffusion Z1, Z2, Z3, chacune de ces zones de diffusion Z1, Z2, Z3 étant couverte respectivement par un émetteur A1, A2, A3, susceptible de diffuser des informations de manière répétée en mode paquets.

Le terminal T, entrant dans la zone de diffusion Z1, Z2, Z3 en e1, e2, e3 respectivement, peut, en se réglant sur le canal de diffusion d'une information par l'émetteur A1, A2, A3 correspondant, recevoir cette information diffusée. Le terminal T, mobile, sort ensuite de la zone Z1, Z2, Z3 en s1, s2, s3 respectivement.

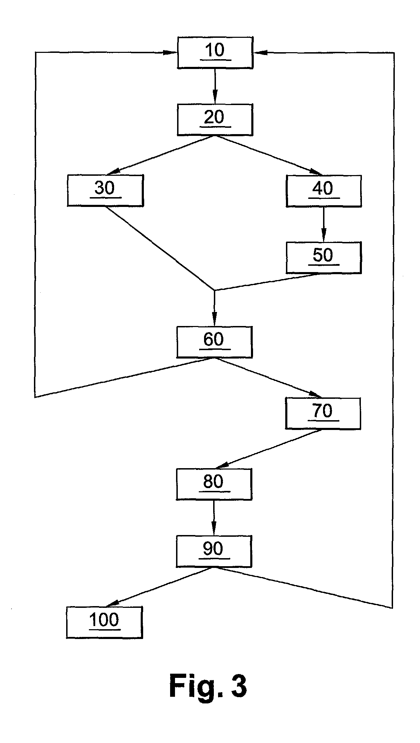

En général, le temps passé dans une zone de diffusion Z1, Z2, Z3 ne suffit pas à recevoir une information dans son intégralité. La figure 2 représente la diffusion de paquets p1, p2, p3, p4, p5 constituant une information diffusée, ces paquets étant au nombre de cinq dans l'exemple décrit, et étant diffusés de manière répétée.

Le terminal T ne peut recevoir ces paquets que lorsqu'il se trouve dans l'une des zones de diffusion Z1, Z2, Z3. Les entrées e1, e2, e3 et sorties s1, s2, s3 des zones de diffusion par le terminal T sont reportées sur la figure 2 avec les mêmes références que sur la figure 1.

Ainsi, dans l'exemple décrit, le terminal T reçoit les paquets p3 et p4 lorsqu'il se trouve dans la zone de diffusion Z1, les paquets p1, p2 et p3 lorsqu'il se trouve dans la zone de diffusion Z2, et les paquets p4 et p5 lorsqu'il se trouve dans la zone de diffusion Z3.

La réception des paquets p1 à p5 n'étant jamais effectuée intégralement dans une même zone, le procédé selon l'invention prévoit en outre une étape de stockage dans le terminal mobile de données de suivi de la réception de ces paquets. Ces données de suivi, stockées dans le terminal mobile T, permettent de reprendre ultérieurement le téléchargement de l'information en ne stockant alors que les paquets qui n'ont pas déjà été reçus et stockés en mémoire.

La figure 3 représente schématiquement les étapes du procédé correspondant à la réception d'un paquet.

Lors d'une première étape 10, le terminal T reçoit un premier paquet, correspondant à une information diffusée actuellement dans la zone de diffusion traversée par le terminal T. Ce premier paquet, tout comme tous les autres paquets relatifs à cette information, comporte des données de renseignement concernant cette information.

Ces données de renseignement comprennent en outre une indication sur l'espace mémoire devant être réservé pour le stockage des paquets, ainsi qu'une indication sur le nombre de paquets à recevoir pour que l'information soit complète.

Ces données de renseignement permettent la création d'un fichier de suivi de la réception des paquets concernant l'information diffusée, ce fichier de suivi comportant notamment une liste des paquets reçus concernant l'information diffusée. Ainsi, lors d'une étape 20, on vérifie s'il existe un tel fichier de suivi.

Si ce fichier de suivi existe, le terminal T l'ouvre lors d'une étape 30.

Si, au contraire, le fichier de suivi n'existe pas encore, c'est à dire dans le cas où aucun paquet concernant cette information n'a été reçu précédemment, on le crée lors d'une étape 40, à l'aide des données de renseignement comprises dans le paquet reçu. Dans ce cas, on réserve de plus un espace mémoire pour le stockage de l'information complète correspondante lors d'une étape 50.

Suite aux étapes 30 et 50, on passe à une étape 60, lors de laquelle on vérifie si le paquet téléchargé lors de l'étape 10 apparaît dans la liste des paquets déjà reçus. Ceci n'est évidemment pas le cas si cette étape 60 fait suite à l'étape 50.

Dans le cas où ce paquet avait effectivement déjà été reçu précédemment, il est inutile de le stocker à nouveau en mémoire, et on attend alors simplement le prochain paquet diffusé.

Dans le cas contraire, c'est à dire dans le cas où le paquet reçu lors de l'étape 10 n'avait pas été reçu précédemment, on stocke ce paquet en mémoire lors d'une étape 70. De plus, lors d'une étape 80, on stocke le numéro de ce paquet dans le fichier de suivi.

Lors d'une étape 90, on contrôle si tous les paquets constituant l'information diffusée ont été reçus.

Si c'est le cas, cela signifie que l'information a été entièrement téléchargée. Cette information est alors définitivement stockée en mémoire et le fichier de suivi correspondant est effacé lors d'une étape 100.

Dans le cas où des paquets n'ont pas encore été reçus, on retourne à l'étape 10 pour attendre la diffusion du paquet suivant.

On notera qu'à partir du moment où un paquet a été stocké en mémoire, il n'aura plus à être téléchargé même si la réception est par la suite interrompue, par exemple par une sortie du terminal T de la zone de diffusion Z1, Z2 ou Z3 dans laquelle il se trouvait. Dans ce but notamment, le fichier de suivi est sauvegardé, par exemple après chacune des opérations susceptibles de le modifier. Le fichier de suivi est ainsi conservé en mémoire, même lorsque la réception est interrompue. Dans un autre mode de réalisation, une sauvegarde du fichier de suivi peut notamment être déclenchée lorsque le terminal T détecte sa sortie de la zone de diffusion Z1, Z2 ou Z3 dans laquelle il se trouvait.

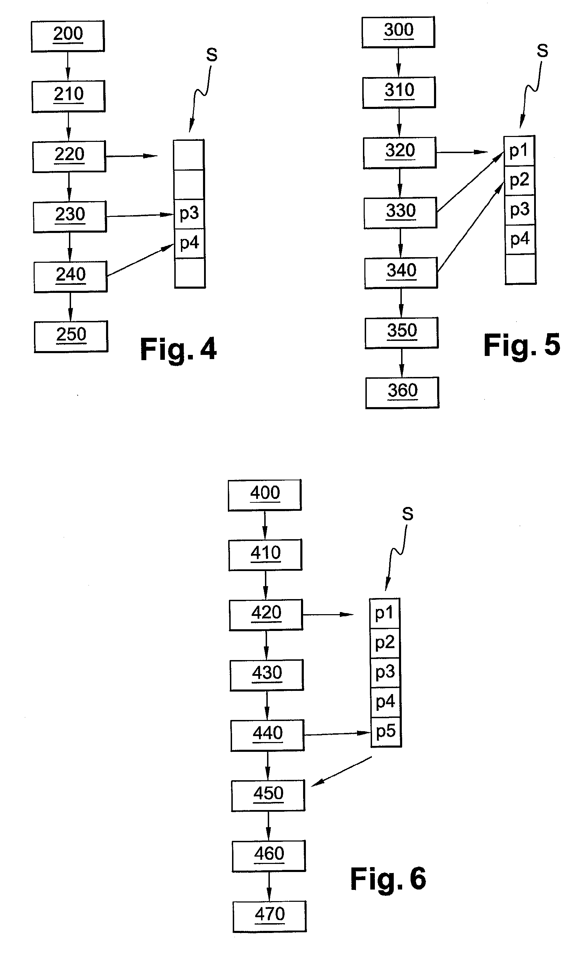

Les figures 4 à 6 représentent la réception d'une information complète par le terminal T lorsqu'il traverse les zones Z1 (figure 4), Z2 (figure 5) et Z3 (figure 6).

Comme représenté sur la figure 4, le terminal T entre dans la zone de diffusion Z1 en e1 lors d'une étape 200. On voit sur la figure 2 que le terminal entre dans cette zone de diffusion Z1 en cours de diffusion du paquet p2.

Le premier paquet pouvant être intégralement reçu par le terminal T est donc le paquet p3, reçu lors d'une étape 210.

Etant donné qu'il s'agit là du premier paquet reçu concernant l'information diffusée, on crée un fichier de suivi S lors d'une étape 220, et on réserve un espace mémoire pour l'information totale. Dans cet exemple, l'information totale comporte cinq paquets.

Lors d'une étape 230, on stocke le paquet p3 en mémoire et on inscrit le numéro du paquet p3 dans la liste des paquets reçus du fichier de suivi S.

Le paquet p4 étant reçu alors que le terminal T est toujours dans la zone Z1, on le reçoit lors d'une étape 240 et on le stocke en mémoire. De même que pour le paquet p3, on inscrit le numéro du paquet p4 dans la liste des paquets reçus du fichier de suivi S.

On voit sur la figure 2 que, lors de la diffusion du paquet p5, le terminal T sort de la zone de diffusion Z lors d'une étape 250. Le paquet p5 n'est donc pas reçu dans son intégralité, et par conséquent n'est pas stocké en mémoire et son numéro n'est pas inscrit dans la liste des paquets reçus du fichier de suivi S. Le terminal T détectant sa sortie de la zone de diffusion Z1, c'est par exemple lors de cette étape 250 que le fichier de suivi S est sauvegardé en mémoire.

Comme représenté sur la figure 5, le terminal T entre ensuite dans une zone de diffusion Z2, lors de la diffusion d'un paquet p5 (voir figure 2). Le premier paquet pouvant y être téléchargé dans son intégralité est donc le paquet p1, que l'on reçoit lors d'une étape 310.

L'information diffusée étant la même que dans la zone Z1, le fichier de suivi S existe déjà et on n'a donc pas besoin de le créer à nouveau. Au lieu de cela, on ouvre alors le fichier de suivi correspondant dans le terminal T, lors d'une étape 320.

Le paquet p1, une fois reçu, est stocké en mémoire lors d'une étape 330, puis on inscrit le numéro du paquet p1 dans la liste des paquets reçus du fichier de suivi S.

Le paquet p2 est ensuite reçu lors d'une étape 340, et est traité de la même manière que le paquet p1.

Le terminal T reçoit ensuite le paquet p3 lors d'une étape 350. Etant donné que le numéro du paquet p3 est inscrit dans la liste des paquets déjà reçus, on ne fait aucun traitement.

Lors d'une étape 360, le terminal T sort de la zone de diffusion Z2, pendant la diffusion du paquet p4, qui n'est donc pas reçu dans son intégralité. Le fichier de suivi S est alors à nouveau sauvegardé en mémoire lors de cette étape 360.

Comme cela est représenté sur la figure 6, le terminal T entre dans une troisième zone de diffusion Z3 en e3 lors d'une étape 400. On remarque sur la figure 2 que le terminal T1 entre dans cette zone de diffusion Z3 lors de la diffusion du paquet p3. Le premier paquet à être reçu dans son intégralité est donc le paquet p4, que l'on reçoit lors d'une étape 410.

Le paquet p4 comporte des renseignements concernant le fichier de suivi correspondant. On remarque donc, lors d'une étape 420, que le fichier de suivi S correspondant existe déjà, et on l'ouvre dans le terminal T.

Lors d'une étape 430, on remarque que le numéro du paquet p4 est inscrit dans la liste des paquets reçus du fichier de suivi S. On passe alors à une étape 440 lors de laquelle on reçoit le paquet p5, que l'on stocke en mémoire. On inscrit de plus le numéro du paquet p5 dans la liste des paquets reçus du fichier de suivi S.

Lors d'une étape 450, le terminal T détecte, notamment grâce au fichier de suivi S, que l'information a été reçue dans son intégralité, puisque les cinq paquets p1, p2, p3, p4 et p5 qui la constituent ont été reçus.

L'information est alors sauvegardée en mémoire lors d'une étape 460, puis le fichier de suivi est effacé lors d'une étape 470.

On notera que la description précédente concerne le téléchargement d'une seule information. Il est cependant possible que le terminal T puisse recevoir et stocker plusieurs paquets concernant plusieurs informations différentes diffusées dans la zone traversée.

On notera par ailleurs que pour réaliser les étapes du procédé décrit précédemment, le terminal T comporte nécessairement :
- des moyens de réception et de stockage d'au moins un paquet correspondant à cette information et diffusé dans la première zone,
- des moyens de stockage de données de suivi de la réception de ce paquet, sous la forme d'un fichier de suivi S de la réception des paquets concernant l'information diffusée,
- des moyens de sauvegarde du fichier de suivi S,
- des moyens de vérification de l'existence d'un fichier de suivi S déclenchés par la réception d'un autre paquet, correspondant à l'information, reçu dans la seconde zone,
- des moyens de stockage, dans le fichier de suivi S, s'il existe, des données de suivi concernant la réception dudit autre paquet.

## Revendications

1. Procédé de réception, par un terminal mobile (T), d'une information diffusée de manière répétée en mode paquets, l'information diffusée comprenant une pluralité de paquets (p1, p2, p3, p4, p5) diffusés dans au moins une première et une seconde zone de diffusion (Z1, Z2, Z3) traversées par le terminal (T), ce procédé comportant :
- une étape de réception (10) et de stockage (70), par le terminal (T) dans la première zone de diffusion, d'au moins un paquet (p1, p2, p3, p4, p5) correspondant à l'information, et
- une étape (80) de stockage, dans le terminal mobile (T) de données de suivi de la réception de ce paquet (p1, p2, p3, p4, p5) sous la forme d'un fichier de suivi de la réception des paquets concernant l'information diffusée,
**caractérisé en ce que** le procédé comporte en outre :
- une étape de sauvegarde du fichier de suivi,
- lorsque le terminal est dans la seconde zone, une étape (20) de vérification de l'existence d'un fichier de suivi (S) concernant l'information diffusée, réalisée après une étape de réception d'un autre paquet correspondant à l'information,
- s'il existe, une étape d'ouverture du fichier de suivi concernant l'information diffusée, et
- une étape de stockage, dans ce fichier de suivi concernant l'information diffusée, des données de suivi concernant la réception dudit autre paquet.

2. Procédé de réception selon la revendication 1, **caractérisé en ce que**, au terme de l'étape de réception (10) et de stockage (70) dudit autre paquet, et après une étape (60) de comparaison de données de suivi concernant ledit autre paquet avec les données déjà stockées dans le fichier de suivi, on prévoit une étape de stockage dudit autre paquet dans le terminal (T) uniquement dans le cas où les données de suivi concernant ledit autre paquet ne se trouvent pas déjà dans le fichier de suivi.

3. Procédé de réception selon la revendication 1 ou 2, **caractérisé en ce qu'**il comporte, après l'étape de vérification de l'existence d'un fichier de suivi :
- une étape d'ouverture du fichier de suivi s'il existe, afin d'y stocker les données de suivi du paquet reçu,
- une étape de création du fichier de suivi s'il n'existe pas déjà, afin d'y stocker les données de suivi du paquet reçu.

4. Procédé de réception selon la revendication 3, **caractérisé en ce que**, lors de la création du fichier de suivi (S), on détermine l'espace mémoire devant être réservé dans le terminal mobile (T) pour le stockage de tous les paquets (p1, p2, p3, p4, p5) correspondant à l'information diffusée, ainsi que le nombre de paquets (p1, p2, p3, p4, p5) à recevoir concernant cette information, à partir de données incluses dans le premier paquet (p1, p2, p3, p4, p5) reçu.

5. Procédé de réception selon l'une quelconque des revendications 2 à 4, **caractérisé en ce que** le fichier de suivi (S) est sauvegardé en mémoire après chaque opération susceptible de le modifier.

6. Procédé de réception selon l'une quelconque des revendications 2 à 5, **caractérisé en ce que** le fichier de suivi (S) est sauvegardé en mémoire lorsque la réception est interrompue, notamment lorsque le terminal mobile (T) sort de la première zone de diffusion (Z1, Z2, Z3).

7. Procédé de réception selon l'une quelconque des revendications précédentes, **caractérisé en ce que** les données de suivi comportent une indication de la taille totale de l'information ainsi que du nombre de paquets la constituant.

8. Procédé de réception selon l'une quelconque des revendications précédentes, **caractérisé en ce que** les données de suivi comportent une liste des paquets (p1, p2, p3, p4, p5) précédemment reçus par le terminal mobile (T), concernant ladite information.

9. Procédé de réception selon l'une quelconque des revendications précédentes, **caractérisé en ce que** le terminal (T) reçoit et stocke plusieurs paquets (p1, p2, p3, p4, p5) concernant plusieurs informations différentes diffusées dans la zone traversée (Z1, Z2, Z3).

10. Terminal mobile (T) de réception d'informations diffusées de manière répétée en mode paquets, au moins une des informations diffusées comprenant une pluralité de paquets (p1, p2, p3, p4, p5) diffusés dans au moins une première et une seconde zone de diffusion (Z1, Z2, Z3) susceptibles d'être traversée par le terminal mobile (T), comportant :
- des moyens de réception et de stockage d'au moins un paquet correspondant à cette information et diffusé dans la première zone, et
- des moyens de stockage de données de suivi de la réception de ce paquet, sous la forme d'un fichier de suivi (S) de la réception des paquets concernant l'information diffusée,
**caractérisé en ce qu'**il comporte en outre :
- des moyens de sauvegarde du fichier de suivi (S),
- des moyens de vérification de l'existence d'un fichier de suivi (S) déclenchés par la réception d'un autre paquet, correspondant à l'information, reçu dans la seconde zone,
- des moyens de stockage, dans le fichier de suivi (S), s'il existe, des données de suivi concernant la réception dudit autre paquet.
